# EUROPÄISCHE PATENTSCHRIFT

(11) **EP 2 626 318 B1**
(45) Veröffentlichungstag und Bekanntmachung des Hinweises auf die Patenterteilung: **21.01.2015**
(21) Anmeldenummer: 12000884.2
(22) Anmeldetag: 10.02.2012
(51) Int. Cl.: B65D 85/808

(54) **Aufgussbeutel**
Infusion bag
Sac d'infusion

(43) Veröffentlichungstag der Anmeldung: 14.08.2013
(73) Patentinhaber: TEEPACK SPEZIALMASCHINEN GMBH & CO. KG, D-40667 Meerbusch (DE)
(72) Erfinder: Lambertz, Stefan, 50354 Hürth (DE); Klein, Michael, 47877 Willich (DE); Knops, Hans, 47839 Krefeld (DE); Reichel, Wolfgang, 47877 Willich (DE)
(74) Vertreter: Grünecker, Kinkeldey, Stockmair & Schwanhäusser

(56) Entgegenhaltungen:
- EP-A1- 1 002 742
- WO-A1-02/40263
- DE-U1- 9 411 639
- GB-A- 881 784
- US-A- 2 186 087
- US-A- 2 787 548

## Beschreibung

Die vorliegende Erfindung betrifft einen Aufgussbeutel mit einer Kammer zur Aufnahme von aufgussfähigem Material, die von einem Filtermaterial umschlossen ist, und einem mit dem Filtermaterial verbundenen Faden.

Die vorliegende Erfindung betrifft insbesondere einen Aufgussbeutel zur Zubereitung von Tee. Gattungsgemäße Aufgussbeutel haben einen Faden, der bei der Zubereitung einer konsumierbaren Flüssigkeit unter Verwendung des Aufgussbeutels üblicherweise aus dem den Aufgussbeutel aufnehmenden Gefäß herausgeführt ist, um den Aufgussbeutel nach Beendigung des Ziehvorgangs aus dem Gefäß herausziehen zu können. Der Faden ist üblicherweise mit einem Etikett verbunden.

Ein gattungsgemäßer Aufgussbeutel ist aus der auf die Anmelderin zurückgehenden EP 1 002 742 B1 bekannt. Bei diesem Stand der Technik ist das die Aufnahme für das aufgussfähige Material umschließende Filtermaterial heißsiegelungsfähig. Das Filtermaterial ist dementsprechend mit einem Kunststoff, beispielsweise Polyethylen oder Polypropylen versehen, welcher unter Wärmeeinfluss aufschmilzt und aneinander liegende Lagen des Filtermaterials bei der Erstarrung miteinander verbindet. Regelmäßig sind in das aufgussfähige Filtermaterial Kunststofffasern aus PP als Haftvermittler eingearbeitet. Eine solche Behandlung des Filtermaterials ist aber nicht immer gewünscht. So wird befürchtet, dass das Kunststoffmaterial bei der Benutzung des Aufgussbeutels, d.h. im Rahmen der Zubereitung Inhaltsstoffe abgibt, die bei Konsumation der aufgegossenen Flüssigkeit in den Körper gelangen. Zwar müssen diese Inhaltsstoffe nicht zwingend gesundheitsschädlich sein. Es wird aber bereits eine etwaige geschmackliche Beeinträchtigung durch die eingearbeiteten Kunststofffasern kritisch gesehen. Dies trifft insbesondere bei Aufgussbeuteln zur Zubereitung von Tee zu, der mitunter geschmacklich sehr fein eingestellt ist.

Die US 2,186,087 A betrifft einen Aufgussbeutel, der durch Falten des Filtermaterials einen Einschlag bildet, der geeignet ist, aufgussfähiges Material wie Tee oder Kaffee aufzunehmen. Von der Falte abgehende Längsränder werden jeweils mit einem Faden durch Nähen miteinander verbunden. Die so gebildete, oberseitig offene Tasche wird mit dem aufgussfähigen Material befüllt. Danach wird auch der Querrand durch einen weiteren Faden vernäht und somit geschlossen. Der so hergestellte Aufgussbeutel hat dementsprechend drei verschiedene Fäden, wobei jeweils einer der Fäden einem der Ränder (den beiden Längsrändern und dem Querrand) zugeordnet ist. Darüber hinaus dient der den Querrand verschließende Nahtfaden der Befestigung eines Etiketts.

Die DE 94 11 639 U1 offenbart einen aus einem Schlauch gebildeten Teebeutel, der mittig gefaltet ist, so dass die offenen Enden des Schlauches an einer Oberseite angeordnet sind. Diese offenen Enden werden dort eingeschlagen und mit einem Nahtfaden fixiert, so dass der Schlauch oberseitig verschlossen ist. Bevorzugt ist insbesondere ein Doppel-Ketten-Stich. Des Weiteren hat der Aufgussbeutel eine rechteckige Grundform, dessen Unterseite durch eine Falte geschlossen ist, wobei die von der Falte rechtwinklig abgehenden Längsränder durch die Außenumfangsfläche des zuvor hergestellten Schlauches gebildet und somit verschlossen sind. Der Schlauch ist lediglich oberseitig zu versiegeln. Dies erfolgt durch einen einzigen Nahtfaden.

Die US 2,787,548 A offenbart einen Aufgussbeutel mit zwei separaten Lagen, die auf ihren gegenüberliegenden Innenflächen jeweils mit einer heißsiegelfähigen Beschichtung versehen sind. Zur Vergrößerung des Kammervolumens wird zwischen die Lagen des Filtermaterials ein Streifen eingebracht. Dieser wird mit der heißsiegelfähigen Oberfläche der Lagen mittels Heißsiegeln verbunden. Sämtliche Ränder des Aufgussbeutels werden mittels Heißsiegeln verbunden. Ein Faden zum Handhaben des Aufgussbeutels wird an dem Querrand vernäht.

Die WO 02/40263 A betrifft ein Verfahren zur Herstellung eines Aufgussbeutels. Dabei wird zunächst eine ebene Bahn aus einem Filtermaterial in Längsrichtung eingeschlagen und an einer Längsnaht miteinander verbunden, so dass ein geschlossener Schlauch entsteht. Dabei werden die Längsränder unter Zwischenlage eines heißsiegelfähigen Fadens miteinander verbunden. Der Schlauch wird in Längenabschnitte geschnitten. Jeder Längenabschnitt wird mittig mit einer Falte versehen, so dass die freien oberen Enden des Schlauches an der Oberseite frei liegen. Auf die ebene Bahn aufgebrachte Mengen an aufgussfähigem Material sind danach bereits in dem geschlossenen Schlauch enthalten. An der Oberseite wird nun ein weiterer heißsiegelfähiger Faden an das Schlauchmaterial herangeführt, um die vier Lagen des Schlauches miteinander zu versiegeln.

Die DE 153 673 A offenbart ein Verfahren zur Herstellung eines Aufgussbeutels für Tee beziehungsweise Kaffee. Eine erste Lage eines Filtermaterials wird auf ein Förderband abgelegt. Diese erste Lage wird in einer Richtung rechtwinklig zu der Förderrichtung des Förderbandes zugeführt. Die Längsränder des Filtermaterials werden dabei mit dünnen Fäden zur Ausbildung von Siegelnähten versehen. Durch Schneiden der ersten Lage vorbereitete Längenstücke werden gegen ein Dosierrad angelegt, um jeweils eine Dosis des aufgussfähigen Materials auf dem Längenstück abzulegen. Auf einer horizontalen Strecke wird von oben eine zweite Bahn Filtermaterial auf das Längenstück aufgelegt. Diese zweite Bahn ist parallel zu dem Förderband ausgerichtet und an ihren Längsrändern mit einem Faden aus heißsiegelfähigem Material versehen. Die zweite Lage wird auf das Längenstück aufgelegt. Die beiden Lagen werden miteinander versiegelt. Danach wird die die zweite Lage bildende Bahn geschnitten, um verschlossene Aufgussbeutel zu vereinzeln.

Die vorliegende Erfindung will einen die obigen Probleme im Wesentlichen vermeidenden Aufgussbeutel angeben.

Zur Lösung dieses Problems wird mit der vorliegenden Erfindung ein Aufgussbeutel mit den Merkmalen von Anspruch 1 angegeben. Dieser Aufgussbeutel hat eine Kammer zur Aufnahme von aufgussfähigem Material. Der erfindungsgemäße Aufgussbeutel kann dabei nicht nur eine einzige, sondern auch mehrere Kammern aufweisen, d.h. insbesondere als Doppelkammerbeutel ausgebildet sein. Das die Kammer umschließende Filtermaterial ist aufgussfähig, d.h. durchlässig zumindest für Wasser und besteht vornehmlich, vorzugsweise ausschließlich aus einem Naturprodukt, beispielsweise Bananenfasern. Insbesondere sind dem Filtermaterial keine Kunststofffasern oder dergleichen heißsiegelfähige Materialien zugesetzt. Das Filtermaterial zur Herstellung des erfindungsgemäßen Aufgussbeutels besteht üblicherweise ausschließlich aus Naturfaser.

Gemäß Anspruch 1 sind Lagen des Filtermaterials durch einen einheitlichen Faden miteinander verbunden. In Abkehr von dem vorbekannten Stand der Technik erfolgt dementsprechend die Verbindung der Lagen nicht unmittelbar über die einzelnen Lagen, sondern durch den Faden, der die Lagen miteinander verbindet. Der Faden kann dabei die Lagen durchsetzen,rd.h. insbesondere mit den Lagen nach Art einer Naht verbunden sein. Der Faden ist indes heißsiegelfähig und die Lagen sind mittels Heißsiegeln miteinander verbunden. Die von der Flüssigkeit im Rahmen des Aufgussvorgangs durchsetzte Oberfläche des Aufgussbeutels kann daher frei von Kunststoffmaterialien bleiben. Lediglich im Bereich der Verbindung, d.h. im Bereich des Fadens kann Kunststoffmaterial vorgesehen sein, durch welches der Faden heißsiegelfähig gemacht wird. Der Faden kann dabei mit Propylen getränkt und/oder mit PP-Fasern durchsetzt sein oder vollständig aus PP bestehen.

Das Filtermaterial ist zur Ausbildung der Kammer(n) üblicherweise gefaltet. Durch eine oder mehrere Falten kann die Anzahl der Nähte reduziert werden, die zur Ausbildung der Kammer(n) notwendig sind. Der erfindungsgemäße Aufgussbeutel kann eine einzige Kammer zur Aufnahme von aufgussfähigem Material ausformen. Es kann sich aber auch um einen Mehrkammerbeutel mit einem im Querschnitt V-Boden handeln, der einander gegenüberliegende Hauptkammern voneinander trennt. Jedenfalls wird gemäß der vorliegenden Erfindung vorgeschlagen, den Aufgussbeutel mit einer rechteckigen Grundform vorzusehen. Diese Grundform weist eine mittige Falte sowie hiervon regelmäßig rechtwinkelig abgehende Längsränder und einen sich parallel zu der Falte erstreckenden Querrand auf. Die mittige Falte, d.h. der Boden des Beutels kann mit einer nach innen geschlagenen Seitenfalte versehen sein. Im Bereich der Längsränder und dem sich parallel zu der Falte erstreckenden Querrand sind die Lagen des Filtermaterials nach der bevorzugten Weiterbildung mit einem einheitlichen Faden verbunden. Der Faden läuft dementsprechend jedenfalls im Rahmen des Herstellungsprozesses von der Falte an dem Rand des Aufgussbeutels um. Der die Falte aufweisende Querrand hat üblicherweise keinen sich parallel dazu erstreckenden Faden.

Vielmehr ist gemäß einer bevorzugten Weiterbildung der vorliegenden Erfindung der Faden im Bereich der Falte auf Höhe der benachbarten Ränder, insbesondere auf Höhe der beiden Seitenränder abgeschnitten. Dieser Weiterbildung liegt die Überlegung zugrunde, dass die Aufgussbeutel aus einer kontinuierlich zugeführten Bahn des Filtermaterials hergestellt werden. Auf diese Bahn wird der Faden als Endlosfaden gelegt, wobei dieser den Längenabschnitt der Bahn, der einem einzigen Aufgussbeutel entspricht, in Längsrichtung der zugeführten Bahn überbrückt und dort im Rahmen der Vereinzelung der einzelnen Aufgussbeutel durch Schneiden der endlos zugeführten Bahn getrennt wird. Die die beiden Seitenränder üblicherweise ausbildende Schneidkante enthält dementsprechend nicht nur das geschnittene Filtermaterial, sondern auch jeweils den durch Schneiden getrennten Faden, der dort im Rahmen der Herstellung von einem Aufgussbeutel zu dem benachbart hierzu vorgesehenen Aufgussbeutel überführt wird.

Gemäß einer bevorzugten Weiterbildung der vorliegenden Erfindung, die insbesondere eine ästhetisch ansprechende Verpackung des Aufgussbeutels erlaubt, ohne dem Erfordernis eines hinreichend langen Fadens zur Handhabung des Aufgussbeutels im Rahmen der Zubereitung abträglich zu sein, wird ein Längenabschnitt des Fadens über den der Falte gegenüberliegenden Querrand hinausgeführt und mit einem Etikett verbunden. Ein mit dem Etikett versehener Längenabschnitt des Fadens geht von einer Schlaufe ab, die in der Kammer aufgenommen ist. Während der Faden bei dieser bevorzugten Ausgestaltung im Randbereich des Aufgussbeutels mit den Lagen des Filtermaterials verbunden ist, wird auf eine entsprechende Verbindung innerhalb der Kammer verzichtet. Dementsprechend kann die zunächst nach Herstellung des Beutels in der Kammer befindliche Schlaufe bei der Zubereitung durch Ziehen an dem Etikett aus der Kammer herausgezogen und der Faden mit einer relativ langen nutzbaren Länge freigelegt werden.

Diese bevorzugte Weiterbildung wird insbesondere dadurch geschaffen, dass der Faden an dem Querrand über einen ersten Randabschnitt parallel zu dem Querrand verläuft und Lagen des Filtermaterials verbindet, danach in die Schlaufe übergeht und im Weiteren zur Befestigung an dem Etikett aus der Kammer herausgeführt und schließlich von dort über einen zweiten Randabschnitt parallel zu dem Querrand verläuft und Lagen des Filtermaterials randseitig verbindet. Der Faden dient dementsprechend im Bereich des Querrandes einerseits der Verbindung des Filtermaterials und zwar randseitig an dem Aufgussbeutel und andererseits zur Bereitstellung eines Fadens zur Handhabung des Aufgussbeutels bei der Zubereitung. Bei dieser bevorzugten Ausgestaltung ist der zunächst durchlaufend im Bereich des Querrandes verlegte Faden zwischen dem ersten und dem zweiten Randabschnitt abgetrennt. Die Trennung erfolgt aber üblicherweise unmittelbar zwischen dem Etikett und dem zweiten Randabschnitt. Dabei liegt das Etikett üblicherweise unmittelbar benachbart zu dem Rand der Kammer, so dass durch einmaliges Schneiden der Faden im Grunde im Wesentlichen bündig einerseits an dem Etikett und andererseits an dem Rand der Kammer endet.

Bei einer alternativen Ausgestaltung ist der Faden über den die Falte aufweisenden Querrand hinausgeführt und mit dem Etikett verbunden. Bei dieser Ausgestaltung ist der die Lagen des Filtermaterials an den Längsrändern verbindende Faden an einer Seite im Wesentlichen bündig auf Höhe des Querrandes abgeschnitten und auf der anderen Seite mit dem Etikett verbunden. Auch bei dieser bevorzugten Ausgestaltung wird der Faden üblicherweise durchgehend über verschiedene, einzelne Aufgussbeutel ausformende Längenabschnitte einer endlos zugeführten Bahn des Filtermaterials gelegt. Auch bei dieser Ausgestaltung verlässt der endlos gelegte Faden im Bereich des die Falte aufweisenden Querrandes den einem Aufgussbeutel zugeordneten Längenabschnitt der Bahn und wird dort beim Abteilen des einzelnen Aufgussbeutels mit dem Filtermaterial geschnitten, wohingegen der Faden an dem gegenüber liegenden Querrand diesen verschließt und darüber hinaus dort mit dem Etikett verbunden ist.

Weitere alternative Ausgestaltungen sind denkbar. So kann der Faden im Bereich des die Falte aufweisenden Querrandes die durch das Filtermaterial gegebene Kontur des Aufgussbeutels verlassen, um im Rahmen der Herstellung an einen benachbart vorgesehenen Längenabschnitt des endlos zugeführten Filtermaterials überführt zu werden, während an dem gegenüberliegenden Querrand der Faden üblicherweise über den Querrand hinausgeführt und dort mit einem Etikett verbunden und gegebenenfalls zur Versiegelung der Lagen des Filtermaterials an diesem Querrand verwendet ist. Alternativ kann der Rand durch Falten verschlossen sein. Auch das freie Ende der Falte kann über den Faden, d.h. über Heißsiegeln gesichert sein. Das jedem einzelnen Aufgussbeutel zugeordnete Etikett kann zunächst mit doppelter Breite vorgesehen und die Trennlinie zwischen zwei Flächenabschnitten für verschiedene Aufgussbeutel überbrückend angeordnet und im Rahmen der Vereinzelung des einzelnen Beutels getrennt sein.

Weitere Einzelheiten und Vorteile der vorliegenden Erfindung ergeben sich aus der nachfolgenden Beschreibung von zwei Ausführungsbeispielen in Verbindung mit der Zeichnung. In dieser zeigen:
- Figur 1: eine perspektivische Seitenansicht eines ersten Ausführungsbeispiels eines Aufgussbeutels;
- Figur 2: eine Draufsicht auf ein Vorprodukt zu dem in Figur 1 gezeigten Ausführungsbeispiel und
- Figur 3: eine perspektivische Ansicht eines zweiten Ausführungsbeispiels.

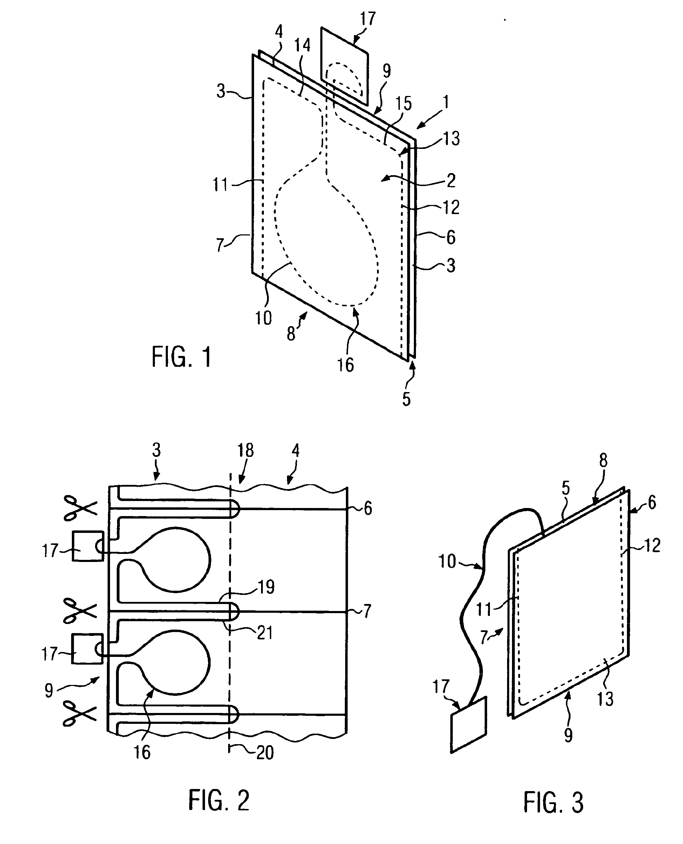

Das in Figur 1 gezeigte Ausführungsbeispiel eines Aufgussbeutels 1 hat eine einzige Kammer 2 zur Aufnahme von aufgussfähigem Material, vorliegend Tee, der nicht dargestellt ist. Die Kammer 2 wird gebildet durch zwei Lagen 3, 4 eines Filtermaterials, welche durch Falten entlang einer mittigen Falte 5 übereinander gelegt sind. Es ergeben sich somit Längsränder 6, 7, die rechtwinkelig zu einem die Falte 5 aufweisenden Querrand 8 und einem sich parallel hierzu erstreckenden an dem gegenüberliegenden Ende vorgesehenen Querrand 9 erstrecken. Entlang der durch das Filtermaterial vorgegebenen Kontur ist ein Faden 10 gelegt, der heißsiegelfähig ausgebildet ist und über den die Lagen 3, 4 miteinander verbunden sind. Der Faden 10 hat Längsrandabschnitte 11, 12 die sich parallel zu den Längsrändern 6, 7 erstrecken sowie einen Querrandabschnitt 13, der aufgeteilt werden kann in einen ersten Randabschnitt 14 und einen zweiten Randabschnitt 15, die jeweils der Befestigung der Lagen 3,4 und dem Verschluss der Kammer 2 dienen. Zwischen den beiden Randabschnitten 14, 15 wird der Faden 10 in einer Schlaufe 16 im Inneren der Kammer 2 aufgenommen und tritt zwischen dem ersten und dem zweiten Randabschnitt 14, 15 über die Kontur des Querrandes 9 hinaus und ist dort mit einem Etikett 17 verbunden. Das Etikett 17 ist aus einem doppellagigen Pappstreifen gebildet, dessen Papplagen miteinander verbunden sind unter Einschluss des Fadens 10. Dieser läuft innerhalb des Etiketts 17 um und wird von dem Etikett 17 unmittelbar in den zweiten Randabschnitt 15 überführt. Dementsprechend liegt das Etikett 17 unmittelbar benachbart zu dem Querrand 9. Im Rahmen der Herstellung wird der Faden 10 zwischen dem Etikett 17 und dem zweiten Randabschnitt 15 durchtrennt, so dass das Etikett 17 lediglich einseitig an den Faden 10 angebunden ist.

Figur 2 verdeutlicht die Herstellung des in Figur 1 gezeigten Ausführungsbeispiels eines Aufgussbeutels 1. Eine Bahn 18 aus Filtermaterial hat eine Breite entsprechend in etwa der doppelten Breite des Aufgussbeutels 1. Als Breite wird hierbei die Erstreckung der Längsränder 6, 7 angesehen. Der Faden 10 wird als Endlosfaden gelegt. Das Etikett 17 wird auf einer Vorbereitungsstrecke relativ zu der Bahn 18 fixiert und läuft mit dieser üblicherweise kontinuierlich mit. Im Rahmen dieser kontinuierlichen Bewegung der Bahn 18 und des Etiketts 17 wird der Faden 10 in der in Figur 2 verdeutlichten Weise aufgelegt. Die Auflagefläche für das Etikett 17 und die Bahn 18 überragende Stifte können hierbei als Umlenkpunkte für den Faden 10 genutzt werden. Diese Stifte durchsetzen üblicherweise das Filtermaterial und sind relativ zu der Auflagefläche beweglich, üblicherweise nach unten herausziehbar, so dass der Faden 10 zunächst mit den Stiften fixiert und während des oder nach dem Übereinanderlegen der Lagen 3, 4 zurückgezogen werden kann. Der Faden 10 wird im Bereich des einen Längsrandes 7 eines mit Bezugszeichen 19 gekennzeichneten Flächenabschnitts zur Ausbildung eines Aufgussbeutels auf diesen Flächenabschnitt 19 überführt, und zwar auf Höhe einer mit Bezugszeichen 20 gekennzeichneten Faltlinie. Von dort wird der Faden 10 parallel zu dem Längsrand 7 geführt und an dem Schnittpunkt zwischen dem Längsrand 7 und dem Querrand 9 umgelenkt, so dass er sich parallel zu dem Querrand 9 erstreckt.

Soweit in der Beschreibung zu Figur 2 auf die Längsränder 6, 7 Bezug genommen wird, erfolgt dies mitunter unter Bezugnahme auf eine Linie, die der Trennlinie entspricht, an welcher die einzelnen Längenabschnitte 19 zur Vereinzelung der Aufgussbeutel von der endlos zugeführten Bahn 18 abgetrennt werden.

Der Faden 10 bildet im Bereich des Querrandes 9 zunächst den zweiten Randabschnitt 15 aus, wird von dort nach außen über die Kontur des Filtermaterials, d.h. über den Querrand 9 hinausgeführt, und zwar im Wesentlichen parallel zu der Erstreckung der Längsränder 6, 7. Dort wird der Faden 10 unmittelbar auf das Etikett 17 aufgelegt und mit diesem verbunden. Von dem Etikett 17 wird der Faden 10 wieder nach innen, über den Querrand 9 hinaus zur Ausbildung der Schlaufe 16 geführt. Die Schlaufe 16 geht wiederum im Bereich des Randes 9 in den ersten Randabschnitt 14 über. Im Eckbereich, d.h. im Bereich des Schnittpunktes zwischen dem Querrand 9 und dem Längsrand 7 wird der Faden 10 wiederum umgelenkt, so dass er sich nun parallel zu dem Längsrand 6 und in unmittelbarer Nähe zu diesem Längsrand 7 jedoch auf dem Flächenabschnitt 19 erstreckt. Im Bereich der Faltlinie 20 ist der Faden 10 wiederum umgelenkt um von dem Flächenabschnitt 19 auf einen benachbarten Flächenabschnitt 21 überführt zu werden.

Nachdem der Faden 10 auf diese Weise gelegt worden ist, wird das Filtermaterial um die Faltlinie 20 gefaltet, so dass die Falte 5 und damit der Querrand 8 entsteht. Danach erfolgt eine Heißsiegelung, so dass die Lagen 3, 4 im Bereich des Fadens 10 miteinander verbunden werden. Die Heißsiegelung erfolgt derart, dass zumindest die Schlaufe 16 von der Heißsiegelung ausgenommen wird. Lediglich im Randbereich und dort, wo der Faden 10 im Wesentlichen parallel zu den Rändern 6, 7, 9 verläuft, erfolgt eine Versiegelung des Fadens 10 mit den Lagen 3, 4. Im Rahmen der Heißsiegelung wird der Faden 10 auch mit dem Etikett 17 mittels Heißsiegeln verbunden.

Im Anschluss wird die Bahn 18 geschnitten. Dabei wird die Bahn 18 im Bereich der Längsränder 6, 7 geschnitten. Im Rahmen dieses Schneidprozesses wird auch der benachbarte Flächenabschnitte 19, 21 überbrückende Faden 10 im Bereich der Falte 5 durchtrennt. Des Weiteren wird der Faden 10 zwischen dem zweiten Randabschnitt 15 und dem Etikett 17 durchtrennt, so dass das Etikett 17 lediglich mit der Schlaufe 16 verbunden ist.

Der Teebeutel 1 ist nunmehr hergestellt und hat die in Figur 1 verdeutlichte Ausgestaltung. Bei Benutzung des Teebeutels 1 kann die Schlaufe 16 durch Ziehen an dem Etikett 17 aus der Kammer 2 entnommen und freigelegt werden, so dass die maximale Fadenlänge zum Aufhängen des Aufgussbeutels 1 zugängig gemacht wird.

Es versteht sich von selbst, dass auf die Ausbildung einer Schlaufe 16, die bei dem Aufgussbeutel 1 in der Kammer 2 aufgenommen ist, verzichtet werden kann. Ebenso gut kann die gewünschte Länge des Fadens 10 auch außerhalb des Filtermaterials vorgesehen werden. Allerdings lässt sich eine Ausgestaltung mit einer in der Kammer 2 vorgesehenen Schlaufe 16 leichter handhaben und verpacken.

Eine alternative Ausgestaltung ist in Figur 3 dargestellt. Gleiche Teile sind gegenüber dem in Figur 1 gezeigten Ausführungsbeispiel mit gleichen Bezugszeichen versehen. Der Faden 10 läuft hier kontinuierlich von der Falte 5 entlang der Kontur des Beutels 1 randnah um. Der Faden 10 durchsetzt den mit der Falte 5 versehenen Querrand 8. Der Faden 10 ist dort auf einer Seite im Grunde bündig mit dem Querrand 8 abgeschnitten und auf der anderen Seite über den Querrand 9 hinausgeführt und mit dem Etikett 17 verbunden. Bei dieser Ausgestaltung kann der Faden 10 beim Falten des Filtermaterials gelegt werden.

### Bezugszeichenliste

- 1: Aufgussbeutel
- 2: Kammer
- 3: Lage
- 4: Lage
- 5: Falte
- 6: Längsrand
- 7: Längsrand
- 8: Querrand
- 9: Querrand
- 10: Faden
- 11: Längsrandabschnitt
- 12: Längsrandabschnitt
- 13: Querrandabschnitt
- 14: erster Randabschnitt
- 15: zweiter Randabschnitt
- 16: Schlaufe
- 17: Etikett
- 18: Bahn
- 19: Flächenabschnitt
- 20: Faltlinie
- 21: benachbarter Flächenabschnitt

## Patentansprüche

1. Aufgussbeutel (1), insbesondere zur Zubereitung von Tee, mit einer Kammer (2) zur Aufnahme von aufgussfähigem Material, die von einem Filtermaterial umschlossen ist, und einem mit dem Filtermaterial verbundenen Faden (10), wobei ein Faden (10) zwischen Lagen (3, 4) des Filtermaterials angeordnet ist, Lagen (3, 4, 5) des Filtermaterials durch den Faden (10) miteinander verbunden sind und wobei der Aufgussbeutel (1) eine rechteckige Grundform mit einer mittigen Falte (5) aufweist, **dadurch gekennzeichnet, dass**
Lagen (3, 4) des Filtermaterials an von der Falte (5) abgehenden Längsrändern (6, 7) und an einem sich parallel zu der Falte (5) erstreckenden Querrand (9) mit einem einheitlichen heißsiegelfähigen Faden (10) mittels Heißsiegeln miteinander verbunden sind.

2. Aufgussbeutel (1) nach Anspruch 1, **dadurch gekennzeichnet, dass** der Faden (10) im Bereich der Falte (5) auf Höhe benachbarter Ränder (6, 7) abgeschnitten ist.

3. Aufgussbeutel (1) nach Anspruch 2, **dadurch gekennzeichnet, dass** der Faden (10) im Bereich der Falte (5) auf Höhe der beiden Seitenränder (6, 7) abgeschnitten ist.

4. Aufgussbeutel (1) nach einem der vorherigen Ansprüche, **dadurch gekennzeichnet, dass** ein Längenabschnitt des Fadens (10) über den der Falte (5) gegenüberliegenden Querrand (9) hinausgeführt und mit einem Etikett (17) verbunden ist und dass der mit dem Etikett (17) verbundene Längenabschnitt des Fadens (10) von einer in der Kammer (2) aufgenommenen Schlaufe (16) abgeht.

5. Aufgussbeutel (1) nach Anspruch 4, **dadurch gekennzeichnet, dass** der Faden an dem Querrand (9) über einen ersten Randabschnitt (14) parallel zu dem Querrand (9) verläuft und Lagen (3, 4) des Filtermaterials verbindet, danach in die Schlaufe (16) übergeht, im Weiteren zur Befestigung an dem Etikett (17) aus der Kammer (2) herausgeführt ist und von dort über einen zweiten Randabschnitt (15) parallel zu dem Querrand (9) verläuft und dass der zunächst durchlaufend im Bereich des Querrandes (9) verlegte Faden (10) zwischen dem ersten Randabschnitt (14) und dem zweiten Randabschnitt (15) abgetrennt ist.

6. Aufgussbeutel (1) nach einem der Ansprüche 1 bis 5, **dadurch gekennzeichnet, dass** der Faden (10) über eine durch das Filtermaterial gegebene Kontur hinausgeführt und mit dem Etikett (17) verbunden ist.

7. Aufgussbeutel (1) nach einem der Ansprüche 1 bis 3, **dadurch gekennzeichnet, dass** der Faden (10) über den die Falte (5) aufweisenden Querrand (8) hinausgeführt und mit dem Etikett (17) verbunden ist.

8. Aufgussbeutel (1) nach Anspruch 7, **dadurch gekennzeichnet, dass** der die Lagen (3, 4) des Filtermaterials an den Längsrändern (6, 7) verbindende Faden (10) an einer Seite im Wesentlichen bündig auf Höhe des Querrandes (8) abgeschnitten und auf der anderen Seite (9) mit dem Etikett (17) verbunden ist.

## Claims

1. Infusion bag (1), in particular for preparing tea, comprising a chamber (2) for accommodating infusable material enclosed by a filter material and a thread (10) connected to the filter material, a thread (10) being disposed between layers (3, 4) of the filter material, layers (3, 4, 5) of the filter material being joined to one another by the thread (10), and the infusion bag (1) has a rectangular main shape with a central fold (5), **characterised in that** layers (3, 4) of the filter material are joined to one another at longitudinal edges (6, 7) extending away from the fold (5) and at a transverse edge (9) extending parallel with the fold (5) by a uniform heat-sealable thread (10) by means of heat-sealing.

2. Infusion bag (1) as claimed in claim 1, **characterised in that** the thread (10) is severed in the region of the fold (5) on a level with adjacent edges (6, 7).

3. Infusion bag (1) as claimed in claim 2, **characterised in that** the thread (10) is severed in the region of the fold (5) on a level with the two side edges (6, 7).

4. Infusion bag (1) as claimed in one of the preceding claims, **characterised in that** a lengthways portion of the thread (10) is run out beyond the transverse edge (9) lying opposite the fold (5) and is connected to a label (17) and the lengthways portion of the thread (10) connected to the label (17) extends out from a loop (16) accommodated in the chamber (2).

5. Infusion bag (1) as claimed in claim 4, **characterised in that** at the transverse edge (9), the thread extends across a first edge portion (14) parallel with the transverse edge (9) and connects layers (3, 4) of the filter material and then merges into the loop (16), and is then run out of the chamber (2) to be attached to the label (17), and from there extends across a second edge portion (15) parallel with the transverse edge (9), and the thread (10) initially run continuously in the region of the transverse edge (9) is severed between the first edge portion (14) and the second edge portion (15).

6. Infusion bag (1) as claimed in one of claims 1 to 5, **characterised in that** the thread (10) is run out beyond a contour defined by the filter material and is connected to the label (17).

7. Infusion bag (1) as claimed in one of claims 1 to 3, **characterised in that** the thread (10) is run out beyond the transverse edge (8) incorporating the fold (5) and connected to the label (17).

8. Infusion bag (1) as claimed in claim 7, **characterised in that** the thread (10) connecting the layers (3, 4) of the filter material at the longitudinal edges (6, 7) is severed at one end essentially flush with the level of the transverse edge (8) and is connected to the label (17) at the other end (9).

## Revendications

1. Sachet d'infusion (1), notamment pour la préparation de thé, comprenant une chambre (2), qui est destinée à recevoir une matière susceptible d'être infusée et est entourée d'un matériau filtrant, le sachet comprenant également un fil (10) relié au matériau filtrant, un fil (10) étant agencé entre des couches (3, 4) du matériau filtrant, des couches (3, 4, 5) du matériau filtrant étant reliées mutuellement par l'intermédiaire du fil (10), et le sachet d'infusion (1) présentant une forme de base rectangulaire avec un pli médian (5), **caractérisé en ce que** des couches (3, 4) du matériau filtrant sont reliées mutuellement au niveau de bords longitudinaux (6, 7) partant du pli (5) et au niveau d'un bord transversal (9) s'étendant parallèlement au pli (5), par scellage à chaud avec un fil (10) uniforme d'un seul tenant, susceptible d'être scellé à chaud.

2. Sachet d'infusion (1) selon la revendication 1, **caractérisé en ce que** le fil (10) est coupé dans la zone du pli (5) à hauteur de bords (6, 7) voisins.

3. Sachet d'infusion (1) selon la revendication 2, **caractérisé en ce que** le fil (10) est coupé dans la zone du pli (5) à hauteur des deux bords latéraux (6, 7).

4. Sachet d'infusion (1) selon l'une des revendications précédentes, **caractérisé en ce qu'**un tronçon de longueur du fil (5) est mené à l'extérieur par-delà le bord transversal (9) opposé au pli (5), et est relié à une étiquette (17), et **en ce que** le tronçon de longueur du fil (10), qui est relié à l'étiquette (17), est issu d'une boucle (16) logée dans la chambre (2).

5. Sachet d'infusion (1) selon la revendication 4, **caractérisé en ce que** le fil, au niveau du bord transversal (9), s'étend, sur un premier tronçon de bord (14), parallèlement au bord transversal (9) et relie des couches (3, 4) du matériau filtrant, se raccorde et forme ensuite ladite boucle (16), puis est mené hors de la chambre (2) vers l'extérieur pour être fixé à l'étiquette (17), et, de là, s'étend, sur un deuxième tronçon de bord (15), parallèlement au bord transversal (9), et **en ce que** le fil (10), tout d'abord posé de manière continue dans la zone du bord transversal (9), est sectionné entre le premier tronçon de bord (14) et le deuxième tronçon de bord (15).

6. Sachet d'infusion (1) selon l'une des revendications 1 à 5, **caractérisé en ce que** le fil (10) est mené à l'extérieur par l'intermédiaire d'un contour donné par le matériau filtrant, et est relié à l'étiquette (17).

7. Sachet d'infusion (1) selon l'une des revendications 1 à 3, **caractérisé en ce que** le fil (10) est mené à l'extérieur par l'intermédiaire du bord transversal (8) présentant le pli (5) et est relié à l'étiquette (17).

8. Sachet d'infusion (1) selon la revendication 7, **caractérisé en ce que** le fil (10) reliant les couches (3, 4) du matériau filtrant au niveau des bords longitudinaux (6, 7), est coupé, d'un côté, sensiblement à ras du bord transversal (8), et est relié, de l'autre côté (9), à l'étiquette (17).
